# EUROPÄISCHE PATENTSCHRIFT

(11) **EP 1 623 103 B1**
(45) Veröffentlichungstag und Bekanntmachung des Hinweises auf die Patenterteilung: **05.12.2007**
(21) Anmeldenummer: 04729896.3
(22) Anmeldetag: 28.04.2004
(51) Int. Cl.: F02B 37/18, F02D 23/00, F02D 41/22

(54) **VERFAHREN ZUR DREHZAHL ÜBERWACHUNG EINES BI-TURBOLADERS**
METHOD FOR MONITORING THE SPEED OF A BI-TURBOCHARGER
PROCEDE POUR CONTROLER LE REGIME D'UN BI-TURBOCOMPRESSEUR

(30) Priorität: 09.05.2003 DE 10320977
(43) Veröffentlichungstag der Anmeldung: 08.02.2006
(73) Patentinhaber: Siemens VDO Automotive AG, 93055 Regensburg (DE)
(72) Erfinder: HENN, Michael, 38165 Lehre (DE); KUNZ, Franz, 93336 Altmannstein (DE); ZHANG, Hong, 93105 Tegernheim (DE)
(86) Internationale Anmeldenummer: PCT/EP2004/050630
(87) Internationale Veröffentlichungsnummer: WO 2004/099585

(56) Entgegenhaltungen:
- EP-A- 0 856 097
- EP-A- 0 894 958
- EP-A- 0 972 926
- DE-A- 19 924 274

## Beschreibung

Die Erfindung betrifft ein Verfahren zur Drehzahlüberwachung bei einem Abgasturbolader gemäß dem Oberbegriff von Anspruch 1 sowie eine Vorrichtung gemäß dem Oberbegriff von Anspruch 8.

Es sind Brennkraftmaschinen mit zwei getrennten Zylinderbänken bekannt, wobei jeder Zylinderbank jeweils ein Abgasturbolader zugeordnet ist. Die beiden Abgasturbolader bestehen jeweils aus einer im Abgastrakt der beiden Zylinderbänke angeordneten Abgasturbine und einem Verdichter, der im Ansaugtrakt der beiden Zylinderbänke angeordnet ist und den Ladedruck erhöht.

Bei einer Verstopfung eines derartigen Bi-Turboladers wird die an dem betroffenen Verdichter umgesetzte Antriebsleistung herabgesetzt. Dies liegt daran, dass die Verstopfung zu einer Verringerung des Volumenstroms führt, wodurch der Ladedruck des betroffenen Abgasturboladers abnimmt. Bei einem derartigen einseitigen Leistungsabfall des Bi-Turboladers wird der jeweils andere Abgasturbolader einen entsprechend größeren Volumenstrom fördern, was aufgrund einer überhöhten Drehzahl des fehlerfrei funktionierenden Abgasturboladers zu einer mechanischen Überlastung führen kann. Es ist deshalb bei einem Bi-Turbolader wichtig, dass störungsbedingte Drehzahlabweichungen zwischen den beiden Abgasturboladern rechtzeitig erkannt werden, um eine Beschädigung des störungsfreien Abgasturboladers durch überhöhte Drehzahlen zu verhindern.

Aus EP 0 856 097 B1 ist ein Verfahren bekannt, um Drehzahlabweichungen zwischen den beiden Abgasturboladern eines Bi-Turboladers zu erkennen. Hierzu ist im Abgastrakt der beiden Zylinderbänke jeweils ein Drucksensor angeordnet, der den Abgasdruck misst. Aus der Differenz der beiden Abgasdrücke kann dann auf die Drehzahldifferenz der beiden Abgasturbolader geschlossen werden. Hierbei wird davon ausgegangen, dass der Differenzdruck zwischen den beiden Zylinderbänken der Brennkraftmaschine mit der Drehzahldifferenz zunimmt. Wenn die Drehzahldifferenz zwischen den beiden Abgasturboladern über einen bestimmten Zeitraum einen vorgegebenen Maximalwert überschreitet, werden Schutzmaßnahmen eingeleitet, die eine Beschädigung verhindern sollen. Beispielsweise kann in einem solchen Fall ein Bypass-Ventil (Waste-Gate) geöffnet werden, das die Abgasturbine des störungsfrei funktionierenden Abgasturboladers umgeht und dadurch dessen Leistung senkt.

Nachteilig an dem vorstehend beschriebenen bekannten Verfahren zur Drehzahlüberwachung eines Bi-Turboladers ist die Tatsache, dass im Abgastrakt beider Zylinderbänke jeweils ein Drucksensor erforderlich ist.

Aus der EP 0 894 958 A2 sind ein gattungsgemäßes Verfahren und eine gattungsgemäße Vorrichtung bekannt, die sich auf Bi-Turbolader beziehen und bei denen Lambda-Sonden eingesetzt werden. Die von den Lambda-Sonden gelieferten Signale werden erfasst und eine Fehlererkennungseinrichtung erkennt einen Fehler, wenn die Signale um mehr als einen voreingestellten Wert voneinander abweichen. Die Bestimmung von Drehzahlwerten für den Bi-Turbolader wird nicht beschrieben. Nachteilig hieran ist, dass folglich eine Drehzahlüberwachung des Bi-Turbolader nicht möglich ist.

Der Erfindung liegt deshalb die Aufgabe zugrunde, ein Verfahren zur Drehzahlüberwachung eines Abgasturboladers zu schaffen, das insbesondere keinen Drucksensor im Abgastrakt der beiden Zylinderbänke benötigt.

Diese Aufgabe wird, ausgehend von dem vorstehend beschriebenen bekannten Verfahren gemäß dem Oberbegriff des Anspruchs 1, durch die kennzeichnenden Merkmale des Anspruchs 1 bzw. - hinsichtlich einer entsprechenden Vorrichtung - durch die Merkmale des Anspruchs 8 gelöst.

Die Erfindung umfasst die allgemeine technische Lehre, die Abgaszusammensetzung einer Brennkraftmaschine auszuwerten, um die Drehzahl eines Laders zu ermitteln.

Vorzugsweise wird im Rahmen des erfindungsgemäßen Verfahrens das Luft/Kraftstoff-Verhältnis ermittelt, das durch die sogenannte Luftzahl wiedergegeben wird. Vorzugsweise wird deshalb die Luftzahl im Abgastrakt der Brennkraftmaschine gemessen, um in Abhängigkeit von der gemessenen Luftzahl auf die Drehzahl des Laders zu schließen. Dies ist einfach möglich, da bei modernen Brennkraftmaschinen mit einem geregelten Abgaskatalysator ohnehin jede Zylinderbank über eine Lambda-Sonde verfügt, die im Abgastrakt der Brennkraftmaschine angeordnet ist und die Luftzahl des Abgases misst.

Der im Rahmen der Erfindung verwendete Begriff eines Abgaswertes ist jedoch allgemein zu verstehen und nicht auf die Luftzahl im Abgas der Brennkraftmaschine beschränkt. Es ist grundsätzlich auch denkbar, bei der Ermittlung der Drehzahl des Laders zusätzliche oder andere Abgaswerte als Kenngrößen im Abgastrakt zu berücksichtigen als die Luftzahl.

Darüber hinaus eignet sich das erfindungsgemäße Verfahren zur Drehzahlüberwachung eines Bi-Turboladers.

Ferner ist es im Rahmen der Erfindung nicht erforderlich, dass der zur Berechnung der Drehzahl dienende Abgaswert durch eine Abgassonde direkt gemessen wird. Es ist vielmehr auch möglich, dass der interessierende Abgaswert aus anderen Betriebsgrößen der Brennkraftmaschine abgeleitet wird.

In einem bevorzugten Ausführungsbeispiel des erfindungsgemäßen Verfahrens wird bei einer Brennkraftmaschine mit zwei Zylinderbänken im Abgastrakt jeder Zylinderbank jeweils ein Abgaswert ermittelt, wobei in Abhängigkeit von den Abgaswerten der einzelnen Zylinderbänke jeweils ein Lader-Drehzahlwert ermittelt wird.

Die Drehzahlwerte der einzelnen Zylinderbänke können dann miteinander verglichen werden, um eine Störung zu erkennen, die beispielsweise durch eine Verstopfung eines der beiden Verdichter verursacht werden kann.

In Abhängigkeit von dem Vergleich der beiden Drehzahlwerte können dann Schutzmaßnahmen eingeleitet werden, wie sie beispielsweise in der eingangs erwähnten Veröffentlichung EP 0 856 097 B1 beschrieben sind, so dass der Inhalt dieser Veröffentlichung der vorliegenden Beschreibung hinsichtlich der möglichen Schutzmaßnahmen zuzurechnen ist.

So kann bei einer großen Drehzahldifferenz zwischen den beiden Abgasturboladern beispielsweise ein Bypass-Ventil (Waste-Gate) geöffnet werden, das die Abgasturbine des störungsfreien Abgasturboladers umgeht und dadurch dessen Leistung herabsetzt, um eine Überlastung zu verhindern.

Eine weitere mögliche Schutzmaßnahme besteht darin, eine zylinderselektive Einspritzausblendung vorzunehmen. Durch eine derartige Einspritzausblendung wird nämlich das Abgas mit Frischgas verdünnt, wodurch sich die Enthalpie des Abgases verringert. Dadurch wird das Lastniveau der Brennkraftmaschine herunter gefahren und entsprechend der erforderliche Ladedruck herunter geregelt. Damit besteht nicht mehr die Gefahr, dass einer der Abgas-Turbolader in einen zu hohen Drehzahlbereich gelangt.

Ferner besteht als Schutzmaßnahme die Möglichkeit, die Maximalöffnung der Drosselklappe der Brennkraftmaschine zu begrenzen, um bei einer Störung eine Überlastung eines Abgasturboladers zu verhindern.

Jede dieser Schutzmaßnahmen kann allein oder in Kombination mit weiteren Schutzmaßnahmen getroffen werden, wobei für jede Schutzmaßnahme ein individueller Maximalwert für die zulässige Drehzahlabweichung zwischen den beiden Abgasturboladern festgelegt werden kann.

In einem bevorzugten Ausführungsbeispiel des erfindungsgemäßen Verfahrens wird die Drehzahl des jeweiligen Abgasturboladers jedoch nicht nur in Abhängigkeit von dem vorstehend beschriebenen Abgaswert (z.B. der Luftzahl im Abgas) ermittelt, sondern auch in Abhängigkeit von mindestens einer weiteren Betriebsgröße der Brennkraftmaschine bzw. des Abgasturboladers.

Beispielsweise kann die Temperatur im Ansaugtrakt der Brennkraftmaschine ermittelt und bei der Bestimmung des Drehzahlwertes des jeweiligen Abgasturboladers berücksichtigt werden. Hierzu wird vorzugsweise ein Temperatursensor verwendet, der im Ansaugtrakt der Brennkraftmaschine einen entsprechenden Temperaturwert misst, wobei der Temperatursensor nahezu an beliebiger Stelle im Ansaugtrakt angeordnet sein kann.

Beispielsweise kann der Temperatursensor stromaufwärts vor der Drosselklappe oder stromabwärts nach der Drosselklappe angeordnet sein.

Beim Einsatz eines Ladeluftkühlers im Ansaugtrakt der Brennkraftmaschine kann der Temperatursensor wahlweise stromaufwärts vor dem Ladeluftkühler oder stromabwärts nach dem Ladeluftkühler angeordnet sein.

Ferner besteht wahlweise die Möglichkeit, den Temperatursensor stromaufwärts vor dem Verdichter oder stromaufwärts nach dem Verdichter anzuordnen.

Weiterhin ist zu erwähnen, dass die Ansaugtrakte der einzelnen Zylinderbänke stromabwärts hinter den Verdichtern zusammengeführt sein können. Der Temperatursensor kann dann wahlweise in den getrennten Zweigen des Ansaugtraktes oder in dem zusammengeführten Bereich des Ansaugtraktes angeordnet sein.

Ferner besteht auch die Möglichkeit, dass die Ansaugtrakte der einzelnen Zylinderbänke stromaufwärts vor den einzelnen Verdichtern zusammengeführt sind. In einem solchen Fall besteht zum einen die Möglichkeit, dass in jedem Zweig des Ansaugtraktes stromaufwärts vor den Verdichtern jeweils ein Temperatursensor angeordnet ist. Zum anderen kann in dem zu sammengeführten Ansaugbereich stromaufwärts vor den beiden Verdichtern ein einziger Temperatursensor vorgesehen sein.

Bei zusammengeführten Ansaugtrakten kann in jedem Ansaugtrakt jeweils eine Drosselklappe angeordnet sein. Es ist jedoch alternativ auch möglich, dass in dem zusammengeführten Bereich des Ansaugtrakts eine gemeinsame Drosselklappe angeordnet ist.

Vorzugsweise erfolgt die Bestimmung der Drehzahl des Abgasturboladers nicht nur in Abhängigkeit von dem Abgaswert (z.B. Luftzahl im Abgas) und/oder der Temperatur im Ansaugtrakt, sondern auch in Abhängigkeit von Druckwerten im Ansaugtrakt.

In einem bevorzugten Ausführungsbeispiel der Erfindung wird deshalb im Ansaugtrakt stromaufwärts vor dem Verdichter und/oder stromaufwärts nach dem Verdichter der Druck gemessen, wobei die Drehzahl in Abhängigkeit von den gemessenen Druckwerten bestimmt wird.

Die Druckmessung erfolgt hierbei vorzugsweise durch Drucksensoren, wobei die Drucksensoren in einem Bereich angeordnet sein können, in dem die Ansaugtrakte mehrerer Zylinderbänke zusammengeführt sind. Es ist jedoch alternativ auch möglich, dass die Drucksensoren jeweils in getrennten Zweigen für jeweils eine Zylinderbank angeordnet sind.

Darüber hinaus kann bei der Bestimmung der Lader-Drehzahl auch der Druck im Abgastrakt der Brennkraftmaschine berücksichtigt werden. Vorzugsweise ist deshalb in jedem Abgastrakt jeweils ein Drucksensor angeordnet, der den Abgasdruck in den Abgastrakten der einzelnen Zylinderbänke misst. Falls die Abgastrakte mehrerer Zylinderbänke zusammengeführt sind, so kann in dem zusammengeführten Bereich ein gemeinsamer Drucksensor angeordnet sein.

In dem bevorzugten Ausführungsbeispiel der Erfindung wird zur Bestimmung der Drehzahl des Laders die Lambda-Regelung ausgenutzt, welche die Luftzahl der Brennkraftmaschine auf einen vorgegebenen Sollwert einregelt, der beispielsweise durch das sogenannte Katalysatorfenster vorgegeben sein kann. In Abhängigkeit von der Soll-Ist-Abweichung zwischen dem vorgegebenen Sollwert der Luftzahl und dem gemessenen Ist-Wert der Luftzahl wird dann eine Stellgröße bestimmt, die auf die Brennkraftmaschine bzw. die Einspritzanlage wirkt und dadurch die Soll-Ist-Abweichung der Luftzahl ausregelt. Hierbei kann aus der zur Ausregelung der Soll-Ist-Abweichung der Luftzahl erforderlichen Stellgröße der Abgasmassenstrom abgeleitet werden. Aus dem so ermittelten Abgasmassenstrom und weiteren Betriebsgrößen der Brennkraftmaschine bzw. der Einspritzanlage kann dann nach einem Turboladerdrehzahlmodell die zugehörige Drehzahl des jeweiligen Turboladers ermittelt werden.

In einem bevorzugten Ausführungsbeispiel der Erfindung wird die Turboladerdrehzahl in Abhängigkeit von dem Luftmassenstrom, der Temperatur im Ansaugtrakt der Brennkraftmaschine, dem Abgasdruck vor dem Verdichter und dem Abgasdruck hinter dem Verdichter aus einem mehrdimensionalen Kennfeld ausgelesen.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine Brennkraftmaschine mit zwei Zylinderbänken und acht Zylindern sowie einem Bi-Turbolader,
- Figur 2: ein vereinfachtes regelungstechnisches Ersatzschaltbild des erfindungsgemäßen Verfahrens sowie
- Figur 3a - 3c: das erfindungsgemäße Verfahren zur Drehzahlüberwachung des Bi-Turboladers aus Figur 1 in Form eines Flussdiagrammes.

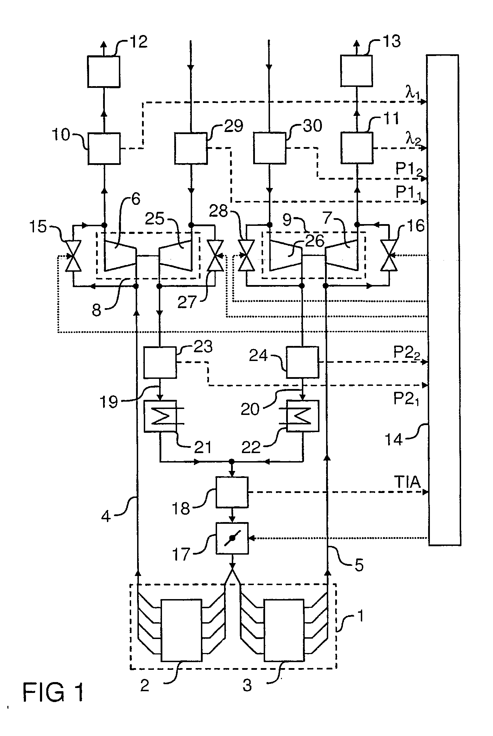

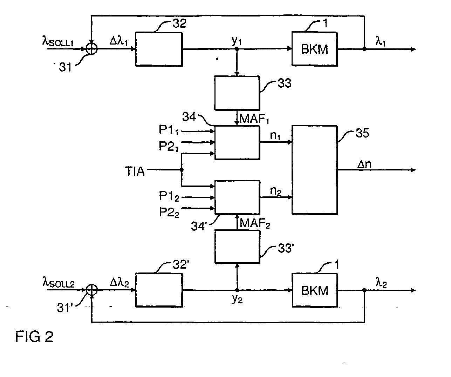

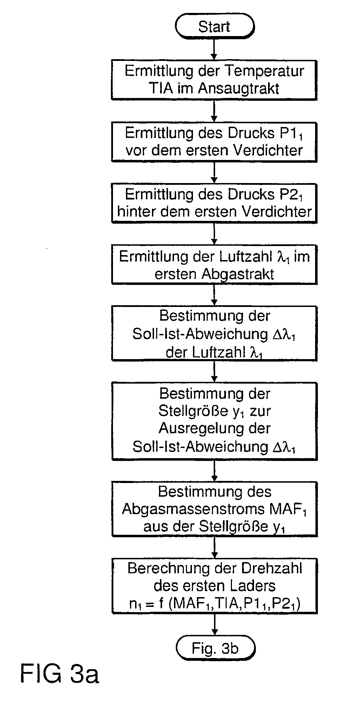

Im folgenden wird zunächst der Aufbau der in Figur 1 dargestellten Bi-Turboladeranordnung beschrieben, um anschließend unter Bezugnahme auf das in Figur 2 dargestellte regelungstechnische Ersatzschaltbild und das in den Figuren 3a - 3c dargestellte Flussdiagramm das erfindungsgemäße Verfahren zu beschreiben.

Die Figur 1 zeigt eine Brennkraftmaschine 1 mit zwei getrennten Zylinderbänken 2, 3 mit jeweils vier Zylindern. Es ist jedoch im Rahmen der Erfindung auch möglich, dass jede der beiden Zylinderbänke 2, 3 eine andere Zylinderzahl aufweist. So kann jede der beiden Zylinderbänke 2, 3 beispielsweise bei einem 6-Zylindermotor je drei Zylinder aufweisen.

Die Brennkraftmaschine 1 weist für jede der beiden Zylinderbänke 2, 3 einen getrennten Abgastrakt 4, 5 auf, wobei der Abgastrakt 4 mit einer Abgasturbine 6 eines Abgasturboladers 8 verbunden ist, während der Abgastrakt 5 an eine Abgasturbine 7 eines Abgasturboladers 9 angeschlossen ist.

Stromabwärts hinter den Abgasturbinen 6, 7 ist jeweils eine Lambda-Sonde 10, 11 sowie ein Abgaskatalysator 12, 13 angeordnet, wobei die Lambda-Sonden 10, 11 die Luftzahl λ₁, λ₂ in den Abgastrakten 4, 5 messen und an eine Steuereinheit 14 weiter leiten.

Ferner ist parallel zu den Abgasturbinen 6, 7 jeweils ein Bypass-Ventil 15, 16 angeordnet, das von der Steuereinheit 14 angesteuert wird und eine Umgehung der Abgasturbinen 6, 7 ermöglicht.

Die Ansaugtrakte der beiden Zylinderbänke 2, 3 der Brennkraftmaschine 1 sind zunächst zusammengeführt, wobei die Frischluftzufuhr zu der Brennkraftmaschine 1 von einer Drosselklappe 17 eingestellt wird, die von der Steuereinheit 14 angesteuert wird.

Stromaufwärts vor der Drosselklappe 17 ist in dem Ansaugtrakt der Brennkraftmaschine 1 ein Temperatursensor 18 angeordnet, der die Frischlufttemperatur misst und ein entsprechendes Temperatursignal TIA an die Steuereinheit 14 weitergibt.

Der Frischlufttrakt der Brennkraftmaschine 1 verzweigt sich stromaufwärts vor dem Temperatursensor 18 in zwei Zweige 19, 20, wobei in den beiden Zweigen 19, 20 jeweils ein Ladeluftkühler 21, 22 angeordnet ist.

Stromaufwärts vor den Ladeluftkühlern 21, 22 befindet sich jeweils ein Drucksensor 23, 24, wobei die beiden Drucksensoren 23, 24 den Ladedruck P2₁ bzw. P2₂ in den beiden Zweigen 19, 20 messen und an die Steuereinheit 14 weiterleiten. Es ist jedoch alternativ auch möglich, dass in dem Ansaugtrakt der Brennkraftmaschine 1 nur ein einziger Drucksensor angeordnet ist, der sich in dem Bereich befindet, in dem die Ansaugtrakte 19, 20 der beiden Zylinderbänke 2, 3 zusammengeführt sind.

Weiterhin befindet sich in den Zweigen 19, 20 jeweils ein Verdichter 25, 26, wobei die Verdichter 25, 26 von den Abgasturbinen 6, 7 angetrieben werden und den Ladedruck erhöhen.

Parallel zu den Verdichtern 25, 26 ist jeweils ein Bypass-Ventil 27, 28 angeordnet, wobei die beiden Bypass-Ventile 27, 28 von der Steuereinheit 14 angesteuert werden und eine Umgehung der Verdichter 25, 26 ermöglichen. Es ist jedoch alternativ auch möglich, dass die beiden Bypass-Ventile 27, 28 mechanisch angesteuert werden, wozu beispielsweise eine Feder eingesetzt werden kann.

Stromaufwärts vor den beiden Verdichtern 25, 26 ist in den beiden Zweigen 19, 20 jeweils ein Drucksensor 29, 30 angeordnet, wobei die beiden Drucksensoren 29, 30 den Druck P1₁, P1₂ stromaufwärts vor den beiden Verdichtern 25, 26 messen.

Im folgenden wird nun das erfindungsgemäße Verfahren anhand des in Figur 2 dargestellten regelungstechnischen Ersatzschaltbilds und des in den Figuren 3a bis 3c gezeigten Flussdiagramms näher erläutert.

Aus dem regelungstechnischen Ersatzschaltbild in Figur 2 ist ersichtlich, dass ein Subtrahierer 31 die Drehzahlabweichung Δλ₁ zwischen einem vorgegebenen Sollwert λ_{SOLL1} und dem von der Lambda-Sonde 10 gemessenen Ist-Wert λ₁ berechnet.

Die Soll-Ist-Abweichung Δλ₁ wird dann einem Regler 32 zugeführt, der in Abhängigkeit von der Soll-Ist-Abweichung Δλ₁ eine Stellgröße y₁ ausgibt und mit der Stellgröße y₁ die Brennkraftmaschine 1 ansteuert, um die Soll-Ist-Abweichung Δλ₁ auszuregeln.

Darüber hinaus wird die Stellgröße y₁ einer Recheneinheit 33 zugeführt, die aus der Stellgröße y₁ den Abgasmassenstrom MAF₁ berechnet.

Die Recheneinheit 33 ist mit einer weiteren Recheneinheit 34 verbunden, welche die Drehzahl n₁ des Abgasturboladers 8 berechnet, wobei die Recheneinheit 34 im Rahmen eines Turboladerdrehzahlmodells den Abgasmassenstrom MAF₁, den Druck P1₁ stromaufwärts vor dem Verdichter 25, den Druck P2₁ stromabwärts hinter dem Verdichter 25 sowie die von dem Temperatursensor 18 gemessene Temperatur TIA berücksichtigt.

Vorstehend wurde die Lambda-Regelung für die Zylinderbank 2 der Brennkraftmaschine 1 beschrieben.

Darüber hinaus ist auch für die Zylinderbank 3 der Brennkraftmaschine 1 eine gleichartige Lambda-Regelung vorgesehen, wie aus dem regelungstechnischen Ersatzschaltbild in Figur 2 im unteren Bereich ersichtlich ist. Die Lambda-Regelung der Zylinderbank 3 ist in gleicher Weise aufgebaut wie die Lambda-Regelung für die Zylinderbank 2, so dass im folgenden auf eine detaillierte Beschreibung der Lambda-Regelung der Zylinderbank 3 verzichtet wird und im folgenden für entsprechende Bauteile dieselben Bezugszeichen verwendet werden, die lediglich zur Unterscheidung durch einen Apostroph gekennzeichnet sind.

Die beiden Recheneinheiten 34, 34' sind ausgangsseitig mit einer Vergleichereinheit 35 verbunden, die aus den beiden Drehzahlwerten n₁, n₂ die Drehzahlabweichung Δn berechnet.

Im folgenden wird nun anhand des in den Figuren 3a bis 3c dargestellten Flußdiagramms das erfindungsgemäße Verfahren beschrieben, wobei auf das regelungstechnische Ersatzschaltbild in Figur 2 sowie auf die in Figur 1 dargestellte Vorrichtung Bezug genommen wird.

Zu Beginn des Verfahrens wird zunächst von dem Temperatursensor 18 die Temperatur TIA im Ansaugtrakt der Brennkraftmaschine 1 gemessen. Die Temperatur TIA ist sowohl für die Berechnung der Drehzahl n₁ des Abgasturboladers 8 als auch für die Berechnung der Drehzahl n₂ des Abgasturboladers 9 im Rahmen eines Turboladerdrehzahlmodells erforderlich, wie noch detailliert beschrieben wird.

Weiterhin wird von dem Drucksensor 29 der Druck P1₁ stromaufwärts vor dem Verdichter 25 des Abgasturboladers 8 gemessen.

Ferner wird von dem Drucksensor 23 der Druck P2₁ stromabwärts hinter dem Verdichter 25 des Abgasturboladers 8 gemessen.

Die beiden Druckwerte P1₁ und P2₁ werden ebenfalls im Rahmen des Turbolader-Drehzahlmodells benötigt, um die Drehzahl n₁ des Abgasturboladers 8 zu ermitteln.

Ferner wird von der Lambda-Sonde 10 die Luftzahl λ₁ im Abgastrakt 4 der Zylinderbank 2 gemessen, um anschließend die Soll-Ist-Abweichung Δλ₁ zu berechnen.

Anschließend wird dann die Stellgröße y₁ ermittelt, die im Rahmen des in Figur 2 dargestellten regelungstechnischen Ersatzschaltbildes von dem Regler 32 erzeugt wird, um die Soll-Ist-Abweichung Δλ₁ auszuregeln.

Aus der Stellgröße y₁ ermittelt die Recheneinheit 33 dann den Abgasmassenstrom MAF₁.

Im Rahmen des Turboladerdrehzahlmodells wird dann die Drehzahl n₁ des Abgasturboladers 8 aus dem Abgasmassenstrom MAF₁, der Temperatur TIA sowie den Druckwerten P1₁ und P2₁ berechnet.

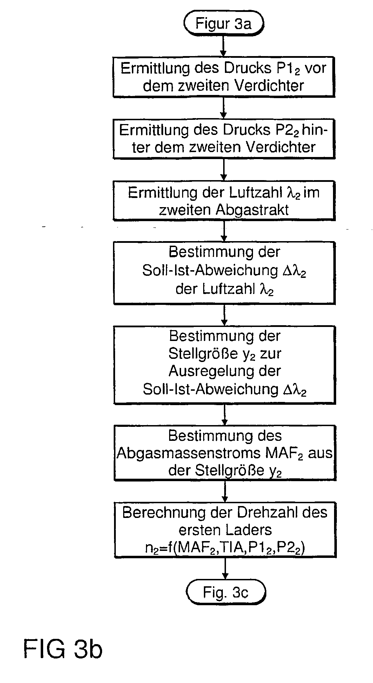

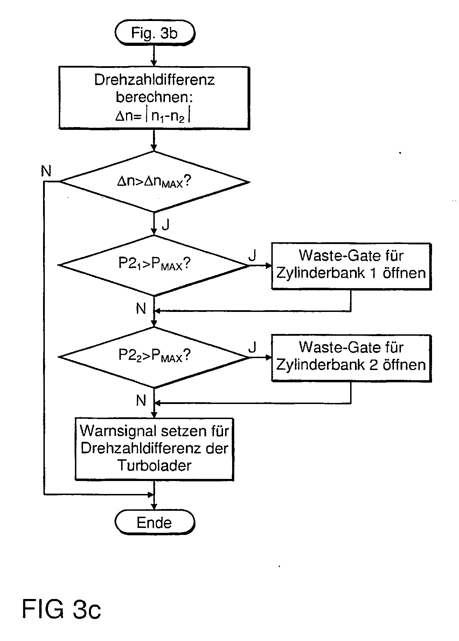

Im folgenden wird nun anhand des in Figur 3b dargestellten Verfahrensabschnitt die entsprechende Berechnung der Drehzahl n₂ des Abgasturboladers 9 beschrieben.

Auch hierbei wird der Druck P1₂ vor dem Verdichter 26 sowie der Druck P2₂ stromabwärts hinter dem Verdichter 26 gemessen.

Weiterhin wird die Luftzahl λ₂ gemessen, um daraus die Soll-Ist-Abweichung Δλ₂ zu berechnen.

Aus der zur Ausregelung der Soll-Ist-Abweichung Δλ₂ erfoderlichen Stellgröße y₂ wird dann wiederum der Abgasmassenstrom MAF₂ berechnet.

In der vorstehend für die Zylinderbank 2 beschriebenen Weise wird dann für die Zylinderbank 3 die Drehzahl n₂ des Abgas turboladers 9 im Rahmen eines Turboladerdrehzahlmodells berechnet, wobei der Abgasmassenstrom MAF₂, die Temperatur TIA, sowie die Druckwerte P1₂ und P2₂ berücksichtigt werden.

In dem in Figur 3c dargestellten Verfahrensabschnitt wird dann aus den zuvor ermittelten Drehzahlwerten n1, n2 die Drehzahldifferenz Δn berechnet und anschließend mit einem vorgegebenen Maximalwert Δn_{MAX} verglichen.

Falls die Drehzahldifferenz Δn den vorgegebenen Maximalwert Δn_{MAX} nicht überschreitet, so liegt keine Störung eines der beiden Abgasturbolader 8, 9 vor, so dass das Verfahren beendet wird.

Falls die Drehzahldifferenz An den vorgegebenen Maximalwert Δn_{MAX} dagegen überschreitet, deutet dies auf eine Störung eines der beiden Abgasturbolader 8, 9 hin.

In diesem Fall wird deshalb der Ladedruck P2₁ bzw. P2₂ jeweils mit einem vorgegebenen Maximalwert P_{MAX} verglichen, um einen übermäßigen Anstieg des Ladedrucks erkennen zu können.

Falls der Ladedruck P2₁, P2₂ eines der beiden Abgasturbolader 8, 9 den zugehörigen Maximalwert P_{MAX} überschreitet, so wird das zugehörige Bypass-Ventil 15 bzw. 16 mindestens teilweise geöffnet, um die Antriebsleistung des betroffenen Abgasturboladers 8 bzw. 9 zu senken und einen übermäßigen Anstieg des Ladedrucks P2₁ bzw. P2₂ zu verhindern.

Darüber hinaus wird in einem solchen Fall ein Warnsignal gesetzt, das einen übermäßigen Anstieg der Drehzahldifferenz zwischen den beiden Abgasturboladern 8, 9 anzeigt und von der Steuereinheit 14 ausgewertet werden kann.

Die Erfindung ist nicht auf das vorstehend beschriebene bevorzugte Ausführungsbeispiel beschränkt. Vielmehr ist eine Vielzahl von Varianten und Abwandlungen möglich, die eben falls in den Schutzbereich fallen.

## Patentansprüche

1. Verfahren zur Drehzahlüberwachung bei einem ersten Abgasturbolader (8) für eine Brennkraftmaschine (1) mit den folgenden Schritten:
a) Ermittlung eines die Abgaszusammensetzung der Brennkraftmaschine (1) in einem ersten Abgastrakt (4) wiedergebenden ersten Abgaswerts (λ₁),
**gekennzeichnet durch**
folgende Schritte:
b) Bestimmung eines die Drehzahl des ersten Abgasturboladers wiedergebenden ersten Drehzahlwerts (n₁) in Abhängigkeit von dem ermittelten ersten Abgaswert (λ₁),
c) Regelung des ersten Abgaswerts (λ₁) **durch** eine erste Stellgröße (y₁) auf einen vorgegebenen ersten Sollwert (λ_{SOLL1}),
d) Ermittlung der zur Ausregelung erforderlichen ersten Stellgröße (y₁),
e) Bestimmung des ersten Drehzahlwerts (n₁) in Abhängigkeit von der ersten Stellgröße (y₁).

2. Verfahren nach Anspruch 1,
**dadurch gekennzeichnet,**
**dass** die Brennkraftmaschine (1) zusätzlich zu dem ersten Abgastrakt (4) einen zweiten Abgastrakt (5) und zusätzlich zu dem ersten Abgasturbolader (8) einen zweiten Abgasturbolader (9) aufweist, wobei zusätzlich folgende Schritte ausgeführt werden:
a) Ermittlung eines die Abgaszusammensetzung der Brennkraftmaschine (1) in dem zweiten Abgastrakt (5) wiedergebenden zweiten Abgaswerts (λ₂),
b) Bestimmung eines die Drehzahl des zweiten Abgasturboladers (9) wiedergebenden zweiten Drehzahlwerts (n₂) in Abhängigkeit von dem ermittelten zweiten Abgaswert (λ₂),
c) Vergleich des ersten Drehzahlwerts (n₁) mit dem zweiten Drehzahlwert (n₂) zur Ermittlung einer Drehzahlabweichung (Δn).

3. Verfahren nach Anspruch 2,
**gekennzeichnet durch**
folgende Schritte:
a) Regelung des zweiten Abgaswerts (λ₂) **durch** eine zweite Stellgröße (y₂) auf einen vorgegebenen zweiten Sollwert (λ_{SOLL2}),
b) Ermittlung der zur Ausregelung erforderlichen zweiten Stellgröße (y₂),
c) Bestimmung des zweiten Drehzahlwerts (n₂) in Abhängigkeit von der zweiten Stellgröße (y₂).

4. Verfahren nach einem der vorhergehenden Ansprüche,
**dadurch gekennzeichnet,**
**dass** der erste Abgaswert (λ₁) und/oder der zweite Abgaswert (λ₂) die Luftzahl der Brennkraftmaschine (1) wiedergibt.

5. Verfahren nach einem der Ansprüche 2 bis 4,
**dadurch gekennzeichnet,**
**dass** aus der ersten Stellgröße (y₁) und/oder aus der zweiten Stellgröße (y₂) der Abgasmassenstrom (MAF₁, MAF₂) und/oder der Abgasvolumenstrom abgeleitet wird.

6. Verfahren nach einem der Ansprüche 2 bis 5,
**dadurch gekennzeichnet,**
**dass** in Abhängigkeit von dem Vergleich zwischen dem ersten Drehzahlwert (n₁) und dem zweiten Drehzahlwert (n₂) ein Bypass-Ventil (15, 16, 27, 28) angesteuert wird, um die Drehzahlabweichung (Δn) zwischen dem ersten Drehzahlwert (n₁) und dem zweiten Drehzahlwert (n₂) zu verringern.

7. Verfahren nach Anspruch 1,
**dadurch gekennzeichnet,**
**dass** der erste Abgaswert (λ₁) und/oder der zweite Abgaswert (λ₂) rückkopplungsfrei gesteuert wird.

8. Vorrichtung zur Drehzahlüberwachung eines ersten Abgasturboladers für eine Brennkraftmaschine (1) mit
a) einem ersten Abgassensor (10) zur Messung eines ersten Abgaswerts (λ₁), der die Abgaszusammensetzung in einem ersten Abgastrakt (4) der Brennkraftmaschine (1) wiedergibt,
**gekennzeichnet durch**
b) eine mit dem ersten Abgassensor (10) verbundene erste Auswertungseinheit (14, 31-34) zur Ermittlung eines die Drehzahl des ersten Abgasturboladers (8) wiedergebenden ersten Drehzahlwerts (n₁) in Abhängigkeit von dem ersten Abgaswert (λ₁),
c) einen ersten Regler (32) zur Regelung des ersten Abgaswerts (λ₁) in dem ersten Abgastrakt (4) auf einen ersten Soll-Wert (λ_{SOLL1}) **durch** Einstellung einer ersten Stellgröße (y₁),
d) wobei die erste Auswertungseinheit (14, 31-34) mit dem ersten Regler (32) verbunden ist,
e) so dass die erste Auswertungseinheit (14, 31-34) den ersten Drehzahlwert (n₁) in Abhängigkeit von der ersten Stellgröße (y₁) bestimmt.

9. Vorrichtung nach Anspruch 8,
**gekennzeichnet durch**
a) einen zweiten Abgassensor (11) zur Messung eines zweiten Abgaswerts (λ₂), der die Abgaszusammensetzung in einem zweiten Abgastrakt (5) der Brennkraftmaschine (1) wiedergibt, und
b) eine zweite Auswertungeinheit (14, 31'-34') zur Ermittlung eines die Drehzahl eines zweiten Abgasturboladers (9) wiedergebenden zweiten Drehzahlwerts (n₂) in Abhängigkeit von dem zweiten Abgaswert (λ₂), und
c) eine Vergleichereinheit (35) zum Vergleich des ersten Drehzahlwerts (n₁) mit dem zweiten Drehzahlwert (n₂).

10. Vorrichtung nach Anspruch 9,
**gekennzeichnet durch**
a) einen zweiten Regler (32') zur Regelung des zweiten Abgaswerts (λ₂) in dem zweiten Abgastrakt (5) auf einen zweiten Soll-Wert (λ_{SOLL2}) **durch** Einstellung einer zweiten Stellgröße (y₂),
b) wobei die zweite Auswertungseinheit (31'-34') mit dem zweiten Regler (32') verbunden ist, um den zweiten Drehzahlwert (n₂) in Abhängigkeit von der zweiten Stellgröße (y₂) zu bestimmen.

11. Vorrichtung nach einem der Ansprüche 8 bis 10,
**dadurch gekennzeichnet,**
**dass** der erste Abgaswert (λ₁) und/oder der zweite Abgaswert (λ₂) die Luftzahl der Brennkraftmaschine (1) wiedergibt.

12. Vorrichtung nach einem der Ansprüche 8 bis 11,
**dadurch gekennzeichnet,**
**dass** aus der ersten Stellgröße (y₁) und/oder aus der zweiten Stellgröße (y₂) der Abgasmassenstrom (MAF₁, MAF₂) und/oder der Abgasvolumenstrom ableitbar ist.

13. Vorrichtung nach einem der Ansprüche 8 bis 12,
**dadurch gekennzeichnet,**
**dass** zur Verringerung der Drehzahlabweichung zwischen dem ersten Abgasturbolader (8) und dem zweiten Abgasturbolader (9) mindestens ein steuerbares Bypass-Ventil (15, 16, 27, 28) vorgesehen ist, wobei die Vergleichereinheit (35) mit dem Bypass-Ventil (15, 16, 27, 28) verbunden ist.

## Claims

1. Method for monitoring the rotational speed of a first exhaust gas turbocharger (8) for an internal combustion engine (1), having the following steps:
a) ascertainment of a first exhaust value (λ₁) representing the exhaust gas composition of the internal combustion engine (1) in a first exhaust section (4),
**characterised by**
the following steps:
b) determination of a first rotational speed value (n₁) representing the rotational speed of the first charger depending on the first exhaust value (λ₁) ascertained.
c) regulation of the first exhaust value (λ₁) to a predefined first reference value (λ_{SOLL1}) by means of a first correcting variable (y₁),
d) ascertainment of the first correcting variable (y₁) required for the correction,
e) determination of the first rotational speed value (n₁) depending on the first correcting variable (y₁),

2. Method according to claim 1,
**characterised in that**
the internal combustion engine (1) has a second exhaust section (5) in addition to the first exhaust section (4) and a second exhaust gas turbocharger (9) in addition to the first exhaust gas turbocharger (8), whereby the following steps are additionally performed:
a) ascertainment of a second exhaust value (λ₂) representing the exhaust gas composition of the internal combustion engine (1) in the second exhaust section (5),
b) determination of a second rotational speed value (n₂) representing the rotational speed of the second exhaust gas turbocharger (9) depending on the second exhaust value (λ₂) ascertained,
c) comparison of the first rotational speed value (n₁) with the second rotational speed value (n₂) in order to ascertain a rotational speed difference (Δn).

3. Method according to claim 2,
**characterised by**
the following steps:
a) regulation of the second exhaust value (λ₂) to a predefined second reference value (λ_{SOLL2}) by means of a second correcting variable (y₂),
b) ascertainment of the second correcting variable (y₂) required for the correction,
c) determination of the second rotational speed value (n₂) depending on the second correcting variable (y₂).

4. Method according to one of the preceding claims,
**characterised in that**
the first exhaust value (λ₁) and/or the second exhaust value (λ₂) represent the air ratio of the internal combustion engine (1).

5. Method according to one of claims 2 to 4,
**characterised in that**
the exhaust mass flow (MAF₁, MAF₂) and/or the exhaust volume flow is derived from the first correcting variable (y₁) and/or from the second correcting variable (y₂).

6. Method according to one of claims 2 to 5,
**characterised in that**
a bypass valve (15, 16, 27, 28) is controlled depending on the comparison between the first rotational speed value (n₁) and the second rotational speed value (n₂) in order to reduce the rotational speed difference (Δn) between the first rotational speed value (n₁) and the second rotational speed value (n₂).

7. Method according to claim 1,
**characterised in that**
the first exhaust value (λ₁) and/or the second exhaust value (λ₂) is controlled in a feedback-free manner.

8. Device for monitoring the rotational speed of a first exhaust gas turbocharger for an internal combustion engine (1), having
a) a first exhaust gas sensor (10) for measuring a first exhaust value (λ1) which represents the exhaust gas composition in a first exhaust section (4) of the internal combustion engine (1),
**characterised by**
b) a first evaluation unit (14, 31-34) connected to the first exhaust gas sensor (10) for ascertaining a first rotational speed value (n₁) representing the rotational speed of the first exhaust gas turbocharger (8) depending on the first exhaust value (λ₁),
c) a first regulator (32) for regulating the first exhaust value (λ₁) in the first exhaust section (4) to a first reference value (λ_{SOLL1}) by setting a first correcting variable (y₁),
d) whereby the first evaluation unit (14, 31-34) is connected to the first regulator (32),
e) such that the first evaluation unit (14, 31-34) determines the first rotational speed value (n₁) depending on the first correcting variable (y₁).

9. Device according to claim 8,
**characterised by**
a) a second exhaust gas sensor (11) for measuring a second exhaust value (λ₂) which represents the exhaust gas composition in a second exhaust section (5) of the internal combustion engine (1), and
b) a second evaluation unit (14, 31'-34') for ascertaining a second rotational speed value (n₂) representing the rotational speed of a second exhaust gas turbocharger (9) depending on the second exhaust value (λ₂), and
c) a comparator unit (35) for comparing the first rotational speed value (n₁) with the second rotational speed value (n₂).

10. Device according to claim 9,
**characterised by**
a) a second regulator (32') for regulating the second exhaust value (λ₂) in the second exhaust section (5) to a second reference value (λ_{SOLL2}) by setting a second correcting variable (y₂),
b) whereby the second evaluation unit (31'-34') is connected to the second regulator (32') in order to determine the second rotational speed value (n₂) depending on the second correcting variable (y₂).

11. Device according to one of claims 8 to 10,
**characterised in that**
the first exhaust value (λ₁) and/or the second exhaust value (λ₂) represents the air ratio of the internal combustion engine (1).

12. Device according to one of claims 8 to 11,
**characterised in that**
the exhaust mass flow (MAF₁, MAF₂) and/or the exhaust volume flow can be derived from the first correcting variable (y₁) and/or the second correcting variable (y₂).

13. Device according to one of claims 8 to 12,
**characterised in that**
at least one controllable bypass valve (15, 16, 27, 28) is provided for reducing the rotational speed difference between the first exhaust gas turbocharger (8) and the second exhaust gas turbocharger (9), whereby the comparator unit (35) is connected to the bypass valve (15, 16, 27, 28).

## Revendications

1. Procédé pour le contrôle de régime d'un premier turbocompresseur à gaz d'échappement (8) pour un moteur à combustion interne (1), comprenant les étapes suivantes :
a) détermination d'une première valeur de gaz d'échappement (λ₁) exprimant la composition des gaz d'échappement du moteur à combustion interne (1) dans un premier conduit d'échappement (4),
**caractérisé par**
les étapes suivantes :
b) définition d'une première valeur de régime (n₁) exprimant la vitesse de rotation du premier turbocompresseur en fonction de la première valeur de gaz d'échappement (λ₁) déterminée,
c) régulation de la première valeur de gaz d'échappement (λ₁) à une première valeur de consigne définie (λ_{SOLL1}) par une première grandeur de réglage (y₁),
d) détermination de la première grandeur de réglage (y₁) exigée pour la régulation,
e) définition de la première valeur de régime (n₁) en fonction de la première grandeur de réglage (y₁).

2. Procédé selon la revendication 1,
**caractérisé en ce que**
le moteur à combustion interne (1) comprend en plus du premier conduit d'échappement (4) un deuxième conduit d'échappement (5), et en plus du premier turbocompresseur à gaz d'échappement (8) un deuxième turbocompresseur à gaz d'échappement (9), les étapes suivantes étant exécutées en complément :
a) détermination d'une deuxième valeur de gaz d'échappement (λ₂) exprimant la composition des gaz d'échappement du moteur à combustion interne (1) dans le deuxième conduit d'échappement (5),
b) définition d'une deuxième valeur de régime (n₂) exprimant la vitesse de rotation du deuxième turbocompresseur (9) en fonction de la deuxième valeur de gaz d'échappement (λ₂) déterminée,
c) comparaison de la première valeur de régime (n₁) avec la deuxième valeur de régime (n₂) pour la détermination d'un écart de régime (Δn).

3. Procédé selon la revendication 2,
**caractérisé par**
les étapes suivantes :
a) régulation de la deuxième valeur de gaz d'échappement (λ₂) à une deuxième valeur de consigne définie (λ_{SOLL2}) par une deuxième grandeur de réglage (y₂),
b) détermination de la deuxième grandeur de réglage (y₂) exigée pour la régulation,
c) définition de la deuxième valeur de régime (n₂) en fonction de la deuxième grandeur de réglage (y₂).

4. Procédé selon l'une des revendications précédentes,
**caractérisé en ce que**
la première valeur de gaz d'échappement (λ₁) et/ou la deuxième valeur de gaz d'échappement (λ₂) expriment le facteur d'air du moteur à combustion interne (1).

5. Procédé selon l'une des revendications 2 à 4,
**caractérisé en ce que**
le débit massique de gaz d'échappement (MAF₁, MAF₂) et/ou le débit volumique de gaz d'échappement sont déduits de la première grandeur de réglage (y₁) et/ou de la deuxième grandeur de réglage (y₂).

6. Procédé selon l'une des revendications 2 à 5,
**caractérisé en ce que**
en fonction de la comparaison entre la première valeur de régime (n₁) et la deuxième valeur de régime (n₂), une soupape de dérivation (15, 16, 27, 28) est commandée pour réduire l'écart de régime (Δn) entre la première valeur de régime (n₁) et la deuxième valeur de régime (n₂).

7. Procédé selon la revendication 1,
**caractérisé en ce que**
la première valeur de gaz d'échappement (λ₁) et/ou la deuxième valeur de gaz d'échappement (λ₂) sont commandées sans rétro-couplage.

8. Dispositif pour le contrôle de régime d'un premier turbocompresseur à gaz d'échappement pour un moteur à combustion interne (1), comprenant :
a) un premier capteur de gaz d'échappement (10) pour la mesure d'une première valeur de gaz d'échappement (λ₁) exprimant la composition des gaz d'échappement du moteur à combustion interne (1) dans un premier conduit d'échappement (4),
**caractérisé par**
b) une première unité d'analyse (14, 31-34) reliée au premier capteur de gaz d'échappement (10) pour la détermination d'une première valeur de régime (n₁) exprimant la vitesse de rotation du premier turbocompresseur (8) en fonction de la première valeur de gaz d'échappement (λ₁),
c) un premier régulateur (32) pour la régulation de la première valeur de gaz d'échappement (λ₁) dans le premier conduit d'échappement (4) à une première valeur de consigne définie (λ_{SOLL1}) par définition d'une première grandeur de réglage (y₁),
d) la première unité d'analyse (14, 31-34) étant reliée au premier régulateur (32),
e) de telle manière que la première unité d'analyse (14, 31-34) définisse la première valeur de régime (n₁) en fonction de la première grandeur de réglage (y₁).

9. Dispositif selon la revendication 8,
**caractérisé par**
a) un deuxième capteur de gaz d'échappement (11) pour la mesure d'une deuxième valeur de gaz d'échappement (λ₂) exprimant la composition des gaz d'échappement du moteur à combustion interne (1) dans un deuxième conduit d'échappement (5), et
b) une deuxième unité d'analyse (14, 31'-34') pour la détermination d'une deuxième valeur de régime (n₂) exprimant la vitesse de rotation d'un deuxième turbocompresseur (9) en fonction de la deuxième valeur de gaz d'échappement (λ₂), et
c) une unité de comparaison (35) pour la comparaison de la première valeur de régime (n₁) avec la deuxième valeur de régime (n₂) .

10. Dispositif selon la revendication 9,
**caractérisé par**
a) un deuxième régulateur (32') pour la régulation de la deuxième valeur de gaz d'échappement (λ₂) dans le deuxième conduit d'échappement (5) à une deuxième valeur de consigne définie (λ_{SOLL2}) par définition d'une deuxième grandeur de réglage (y₂),
b) la deuxième unité d'analyse (31'-34') étant reliée au deuxième régulateur (32'), pour définir la deuxième valeur de régime (n₂) en fonction de la deuxième grandeur de réglage (y₂).

11. Dispositif selon l'une des revendications 8 à 10,
**caractérisé en ce que**
la première valeur de gaz d'échappement (λ₁) et/ou la deuxième valeur de gaz d'échappement (λ₂) expriment le facteur d'air du moteur à combustion interne (1).

12. Dispositif selon l'une des revendications 8 à 11,
**caractérisé en ce que**
le débit massique de gaz d'échappement (MAF₁, MAF₂) et/ou le débit volumique de gaz d'échappement sont déductibles de la première grandeur de réglage (y₁) et/ou de la deuxième grandeur de réglage (y₂).

13. Dispositif selon l'une des revendications 8 à 12,
**caractérisé en ce que**
pour réduire l'écart de régime entre le premier turbocompresseur (8) et le deuxième turbocompresseur (9), au moins une soupape de dérivation (15, 16, 27, 28) pouvant être commandée est prévue, l'unité de comparaison (35) étant reliée à la soupape de dérivation (15, 16, 27, 28).
